# EUROPEAN PATENT APPLICATION

(11) **EP 1 335 365 A2**
(43) Date of publication of application: **13.08.2003**
(21) Application number: 02257720.9
(22) Date of filing: 07.11.2002
(51) Int. Cl.: G11B 20/00

(54) **Data storage apparatus and method**

(30) Priority: 31.01.2002 JP 2002024612
(71) Applicant: FUJITSU LIMITED, Kawasaki-shi, Kanagawa 211-8588 (JP)
(72) Inventor: Naito, Kazunori, c/o Fujitsu Limited, Kawasaki-shi, Kanagawa 211-8588 (JP); Akiyama, Ryota, c/o Fujitsu Limited, Kawasaki-shi, Kanagawa 211-8588 (JP)
(74) Representative: Hitching, Peter Matthew

(57) **Abstract**

A data storage apparatus is provided that comprises: an acquiring unit (12) for acquiring a signature key (31) from a portable/simple storage medium (30) such as an IC card; and a signature generation unit (11) for generating a signature, when issuing to a storage medium drive device a request to write data to a portable storage medium (22) such as a magneto-optical disk (MO), using the data, time information output by a clock (21) which cannot adjust time information, and the signature key (31) read from the portable/simple storage medium (30) by the acquiring unit (12).

## Description

The present invention relates to an apparatus and a method for verifying the correctness of the data / date and time recorded especially on a portable storage medium, or an apparatus, a method, etc. for improving the impartiality and the security of data transmitted through a portable storage medium in a high-speed information transmission system.

There have been various portable storage media for storing information such as a magneto-optical disk (MO).

A magneto-optical disk has the advantage that it has a wide range of uses because it is a erasable storage medium and has a large storage capacity. On the other hand, it has the disadvantage that data or its date and time can be easily tampered. That is, it is more difficult to prove that the data and time and its date recorded on a magneto-optical disk, etc. have not been tampered than on paper.

To solve the problem, the applicant of the present invention has suggested the invention described in, for example, Japanese Patent Application No.10-289523.

According to the invention described in the prior application (Japanese Patent Application No.10-289523), using a PC card having a built-in data encryption circuit including a tamper-free clock and a DES (data encryption standard), an output hash function is obtained by inputting data "DATA" stored on the MO, data "DATE" output of the tamper-free clock, a medium ID "MID", and history information "LOG" when data is stored. The obtained output hash function is stored on the MO as a digital signature "CS". When the data is verified, a hash function output value obtained in a similar process is compared with the "CS", thereby determining whether or not the data has been tampered.

According to the invention described in the Japanese Patent Application No.10-289523, it is possible to check whether or not the contents and the generation date of data have been tampered. However, it is practically desired that a common/general-purpose configuration can be used, and the configuration can be designed for user convenience with the security maintained. Additionally, it is desired that the security can be further improved. The "security" refers to, for example, the protection against the problem that the apparatus and the method for verifying the correctness of data and its date may lose their reliability by illegal use of a signature key by an unauthorized third party or by tampering of a digital signature.

Since the MO medium has the merit that it is a large capacity and portable medium, it can be used in distributing information offline when the infrastructure of a network is not sufficiently provided (for example, when the communications speed is very low), when a large problem can occur if data is lost/peeped/tampered, etc. during the transmission of important data, etc.) (encryption does not 100% guarantee the security) when no network is to be used, etc.

However, when data is distributed to a plurality of destinations at different reception times, there arises the problem of partiality in information delivery speed.

In addition, there has been a demand to possibly avoid the disclosure of the electronic data distributed through the MO medium with a view to enhancing the security of the data.

The present invention aims at providing a data storage apparatus, a data storing method, a data verification apparatus, etc. capable of verifying the correctness of data and its date stored on a portable storage medium with a common/general-purpose configuration, allowing a user convenience while maintaining the security, and further improving the security, or a data access permission apparatus, etc. capable of enhancing the impartiality and the security of data when distributing a portable storage medium to an external device.

According to an embodiment of a first aspect of the present invention there is provided a data storage apparatus comprising: an acquiring unit for acquiring a signature key from a portable/simple storage medium; and a signature generation unit for generating a signature, when issuing to a storage medium drive device a request to write data to a portable storage medium, using the data, time information output by a clock which cannot adjust the time information, and the signature key read from the portable/simple storage medium by the reading unit.

According to an embodiment of a second aspect of the present invention there is provided a data storage apparatus comprising: a clock unit which cannot adjust time information; and a writing unit for writing to a portable storage medium, upon storing data, the data, the time information output by the clock unit, and a signature generated using the data, the time information, and the signature key read from a portable/simple storage medium with association.

According to an embodiment of a third aspect of the present invention there is provided a data storage apparatus comprising: a clock unit which cannot adjust time information; and a writing unit for writing to a portable storage medium, upon storing data, the data, the time information output by the clock unit, and a signature generated using the data, the time information, and the signature key stored in a write-once area of a portable storage medium with association.

In an embodiment of any of the first through third aspects described above, like in the previous application, tampered data or date can be detected in later data verification, thereby successfully verifying the correctness of the data and the date, and further having the following effects.

First, in an embodiment of the first and second aspects, a signature key is stored on a portable/simple storage medium which can be easily used and carried around by a user. The portable/simple storage medium which can be easily used and carried around by a user is, for example, an IC card. An IC card is compact, lightweight, and user-friendly. When a signature is generated, a signature key is an important element. By allowing a user to own the signature key, the possibility that the signature key can be used by a third party can be minimized, thereby improving the security. Additionally, a necessary cost can be reduced by using an inexpensive IC card and realizing a signature generation unit by software. Furthermore, the third data storage apparatus does not require an IC card, thereby further simplifying the configuration and reducing the necessary cost.

In addition, by providing a storage medium drive device or an information processing device with a clock unit which cannot adjust time information and a signature generation unit, a data storage apparatus can be realized with a common/general purpose configuration. Especially, since the clock unit and the signature generation unit are provided for the storage medium drive device in the second and third data storage apparatus, the entire configuration can be incorporated and simplified.

Furthermore, the portable storage medium preferably has an erasable user area and a write-once area so that the writing unit can write the data and the time information to the user area, and the signature to the write-once area. Thus, by setting a signature unerasable, tampered data and time information can be detected with high precision.

According to an embodiment of a fourth aspect of the present invention there is provided a data verification apparatus which verifies the correctness of the data in the portable storage medium storing data, time information, and a signature as associated with one another, comprising: a signature generation unit for generating a signature using the data stored on the portable storage medium, the time information, and a signature key used in generating the signature when the data is stored, and read from a portable/simple storage medium storing the signature key; and a comparison-determination unit for comparing the signature generated by the signature generation unit with the signature stored on the portable storage medium, and determining the correctness of the data or the time information depending on the matching/non-matching result.

Thus, when the correctness of data is verified, a portable/simple storage medium to be held by an authorized user is required.

According to an embodiment of a fifth aspect of the present invention there is provided a data access permission apparatus comprising: a clock unit which cannot adjust time information; and an access permission unit for reading an expiration date from a portable storage medium having a user area storing data and a write-once area storing the expiration date, comparing the expiration date with current time information output by the clock unit, and permitting access to the data stored in the user area if the expiration date has not passed the current date.

According to data access permission apparatus embodying the fifth aspect of the invention, the impartiality can be maintained in information acquisition speed since data cannot be referred to until the expiration date although the data is distributed at different distribution (reception) dates and times when the portable storage media are distributed to a plurality of destinations. Furthermore, since the data cannot be referred to if the expiration date has passed the current date, the data cannot be referred to although a third party acquires the portable storage medium for any reason after the portable storage medium has been used at any destination.

According to an embodiment of a sixth aspect of the present invention there is provided a data access permission apparatus comprising: a clock unit which cannot adjust time information; and an access permission unit for reading an expiration date from a portable storage medium having a user area storing data and a write-once area storing the expiration date, comparing the expiration date with current time information output by the clock unit, and, if the expiration date has passed the current date, either performing a low level format on the portable storage medium or setting the information that the portable storage medium is not low-level-formatted.

Since the data is forcibly and completely deleted if the expiration date has passed according to data access permission apparatus embodying the sixth aspect of the invention, the information can be protected against disclosure. As a simple countermeasure, the information indicating that a low level format is not applied can be set.

The present invention is not limited to the configurations of the above mentioned apparatuses, but can be realized in the configurations of a method, a program, and a storage medium.

Reference will now be made, by way of example, to the accompanying drawings, in which:
FIG. 1 shows the outline of the first configuration of the data storage apparatus according to the first embodiment of the present invention;
FIG. 2 shows the data storage system of the MO;
FIG. 3 is a flowchart of the process procedure of the signature generation unit;
FIG. 4 shows the flow of the process performed when data is verified, and the configuration used when data is verified;
FIG. 5 is a flowchart for explanation of the data verifying procedure;
FIG. 6 shows the outline of the second configuration of the data storage apparatus according to the first embodiment of the present invention;
FIG. 7 shows the outline of the third configuration of the data storage apparatus according to the first embodiment of the present invention;
FIG. 8 is a view for explanation of the storage area of an MO (magneto-optical disk) according to the second embodiment of the present invention;
FIG. 9 shows the configuration of the function when an MO device built in a tamper-free clock according to the second embodiment of the present invention;
FIG. 10 is a flowchart for explanation of the process procedure performed by the determination unit shown in FIG. 9;
FIG. 11 shows the appearance of the entire configuration when a PC card having a tamper-free clock is used according to the second embodiment of the present invention;
FIG. 12 shows the configuration of the hardware of the information processing device; and
FIG. 13 is a view for explanation of an example of a storage medium.

The embodiments of the present invention are described below by referring to the attached drawings.

Although the explanation is given by referring to an MO (magneto-optic disk), embodiments of the present invention are not limited to this application, but any portable and erasable storage medium such as a DVD, DF, removable hard disk, etc. can be applied.

The write-once area described later can be easily controlled using a write-once type storage medium. However, when an erasable storage medium is used, an area is defined in a predetermined position of the storage medium as a write-once area. The definition is stored by a medium manufacturer, etc. in advance in a control information storage area of the medium. Otherwise, when a user requests to use an area as a security medium, it is stored in the control information storage area or a security information storage area of the medium. When a storage medium drive device reads control information or security information from a storage medium, the area is processed as a write-once area. The drive device can control the write-once area not to be rewritten. Otherwise, medium information indicating that an area in a predetermined position is controlled as a write-once area can be stored in a medium information storage unit of the storage medium drive device, thereby realizing the control of the write-once area.

In the explanation below, an IC card is used in the configuration for storing a signature key. However, the configuration is not limited to this application, but any compact and portable medium which can store data can be used (for example, a personal authentication device having a USB interface, etc.), and is hereinafter generally referred to as 'portable/simple storage medium'.

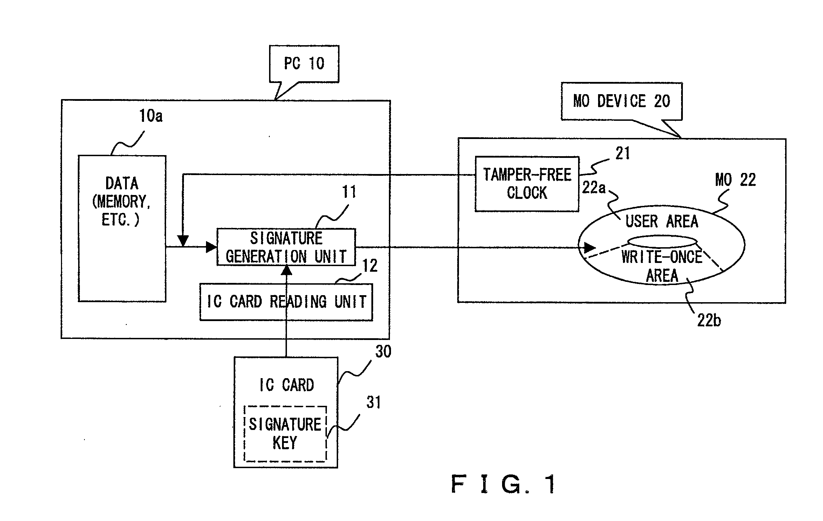

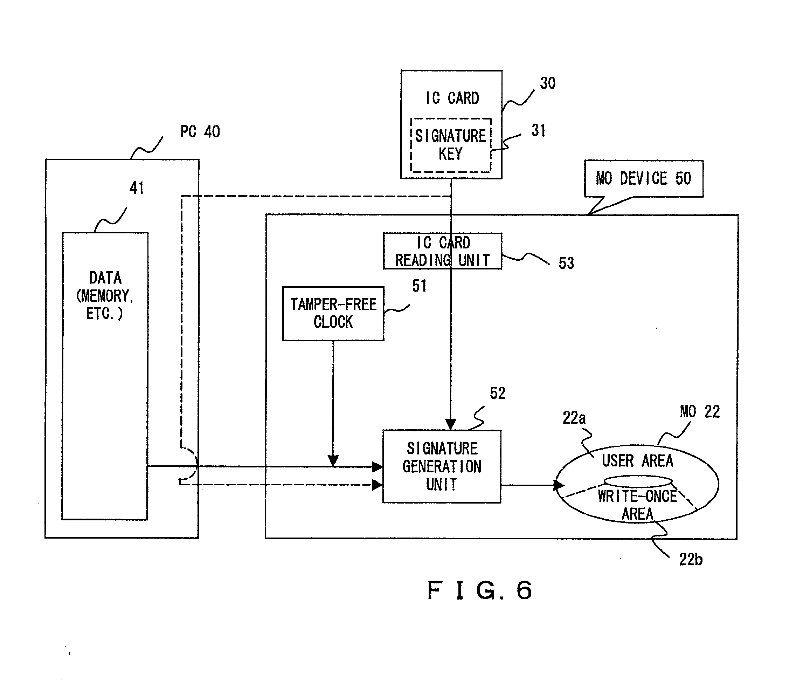

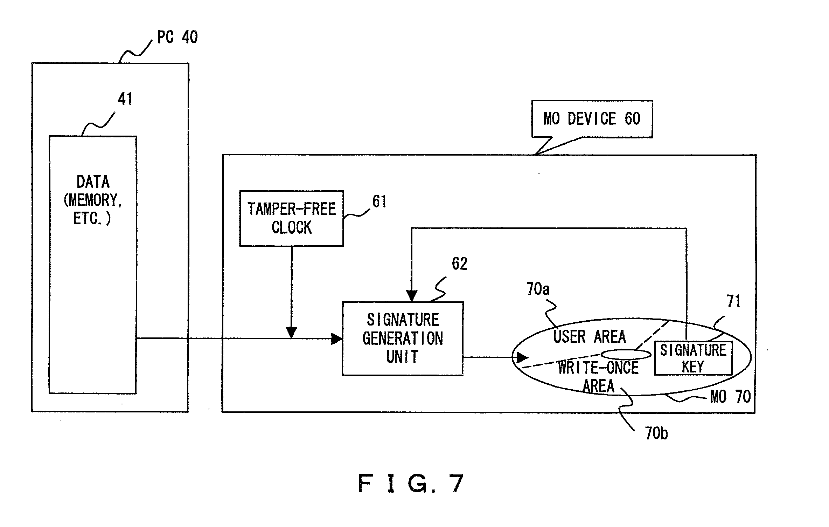

FIGS. 1, 6, and 7 show the configurations of the data storage apparatus according to the first embodiment of the present invention. FIG. 1 shows the first configuration, FIG. 6 shows the second configuration, and FIG. 7 shows the third configuration.

The first configuration shown in FIG. 1 is described below as a representative.

First, the process performed when data is stored is described below by referring to FIGS. 1 through 3.

FIG. 1 shows the first configuration of the according to the first embodiment of the present invention.

The first configuration shown in FIG. 1 includes a PC 10, an MO device 20, and an IC card 30.

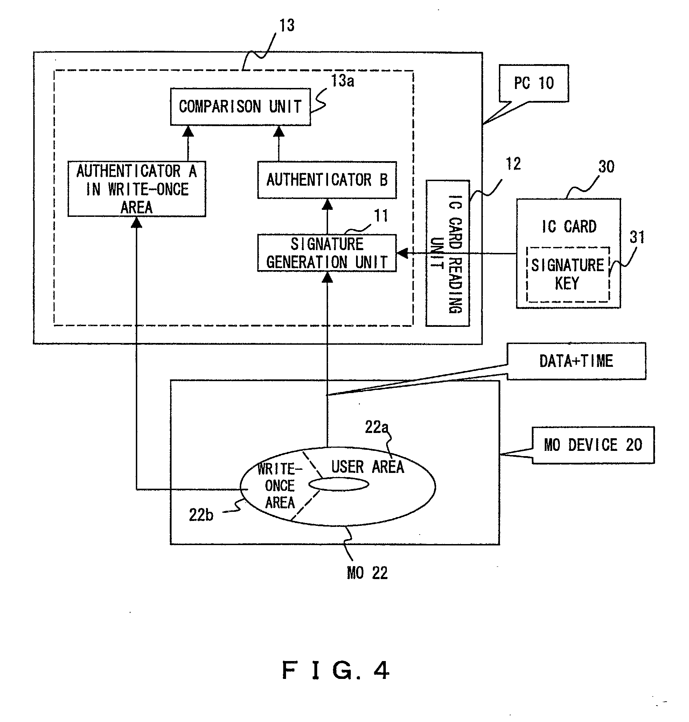

The PC 10 is an information processing device (an information processing device forming part of the host device in the data storage apparatus according to the present embodiment) such as a personal computer, etc., and comprises a signature generation unit 11 and an IC card reading unit 12. FIG. 1 also shows data 10a (data to be written in an MO 22) stored in the memory, etc. The PC 10 is also provided with a data verification unit 13 described later by referring to FIG. 4. Additionally, an information processing device forming part of the host device is not limited to the above mentioned personal computer, but can be, for example, a terminal device of a portable phone, etc., a digital camera for still images and/or moving pictures, an intelligent television device, etc.

Furthermore, the above mentioned information processing device can also have a configuration including a card drive device and a storage medium drive device, and the card drive device and/or the storage medium drive device can be configured to be connectable to an interface.

The MO device 20 comprises a tamper-free clock 21. A tamper-free clock cannot adjust (amend) time information, and is a conventional unit. The tamper-free clock can be hardware/software. In FIG. 1, the MO (magneto-optical disk) 22 is set inside the MO device 20.

The basic configuration of the MO device 20 includes a rotary drive motor for rotating an MO disk, a record/regeneration optical head for recording/regenerating data for the MO disk, and a control unit, etc. (a microprocessor unit, a digital signal processor, etc.).

The tamper-free clock can be provided not for the MO device 20, but for the PC 10. However, it is more reliable to provide the tamper-free clock for the MO device 20 (for example, it is doubtful whether the date and time can be initially set correctly when the tamper-free clock is produced in the PC 10. Actually, since the MO device 20 performs a writing operation onto the MO 22, it is more reliable to provide the tamper-free clock for the MO device 20). When the tamper-free clock is provided for the MO device 20, the MO device can also be provided with a signature generation unit as in the second and third configurations described later so that the user can practically use the MO device, connect it to a normal information processing device, and realize the data storage apparatus according to the present embodiment.

The IC card 30 stores a signature key 31 in the built-in memory.

The signature key 31 is an encryption key corresponding to the encryption algorithm used by the signature generation unit 11. For example, when an encryption algorithm such as a DES (data encryption standard), etc. is adopted, the signature key 31 corresponds to its secret key.

The IC card 30 is held by a user. Otherwise, a plurality of members of a group can share the card. Thus, the signature key 31 is stored on the IC card 30 separate from the device (the PC 10, the MO device 20, etc.) so that the user fundamentally holds/manages the IC card 30, thereby protecting the data storage apparatus and the data verification apparatus described later against a use without the IC card 30.

The PC 10 can also be provided with the IC card reading unit 12 (or can be connected to an IC card reader, etc.). The IC card reading unit 12 can be of contact/non-contact type.

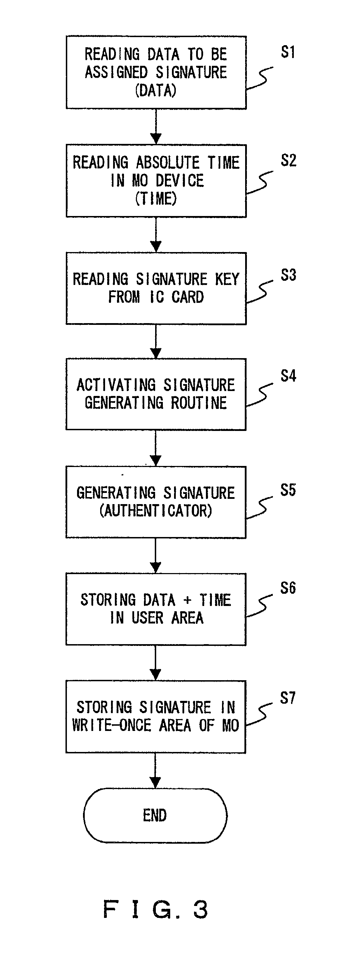

Thus, with the first configuration according to the first embodiment, the MO device 20 built in the tamper-free clock can be used without using the PC card having the function of the tamper-free clock and generating a signature (authenticator) as in the prior application, a personal computer (PC 10) has the function of generating a signature (authenticator), and the signature key 31 is stored on the IC card 30. Additionally, software realizes the function of generating a signature by the signature generation unit 11 while a circuit realizes the function in the prior application. The process flow by the signature generation unit 11 is shown in FIG. 3 as described later.

With the above mentioned configuration, the following effects can be obtained in addition to the effects of the prior application. The following effects can also be obtained in the second and third configurations described later.
* An IC card can be used in a number of personal computer environments, and can be used at a low cost.
* With the configuration of providing a tamper-free clock for an MO device as in the present embodiment, the tamper-free clock can be used regardless of the battery capacity.
* According to the present embodiment, the MO device 20 is provided with the tamper-free clock, and the personal computer has the function of generating a signature (authenticator)(the MO device can also has the function of generating a signature as with the second configuration described later). Thus, the card is only used to authenticate a person, and can have the simplest function. As it is well know, an IC card is small, thin, and lightweight, and therefore has the best portability.
* The IC card is less expensive than a PC card, and requires no circuit for generating a signature (the function can be realized by software), thereby reducing a cost.

As described above, the system according to the present invention can be easily incorporated into the current general-purpose system.

The MO 22 used in the present embodiment includes a write-once area 22b (an area to which data can be written only once).

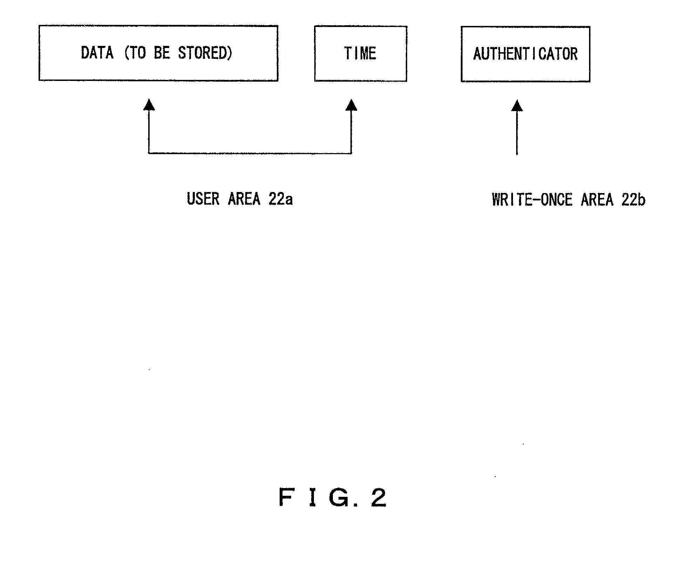

As shown in FIG. 2, when DATA (the data 10a stored on an MO), a time (TIME) output from the tamper-free clock 21, and an authenticator (signature) generated by the signature generation unit 11 are associated with one another and stored on the MO 22, DATA and TIME are stored in a user area 22a, and an authenticator is stored in the write-once area 22b.

Thus, although DATA and TIME stored on the MO 22 are tampered, and the authenticator is also tampered, the tampering can be detected without fail when data is verified later.

The MO device 20 is embedded with driver software (or firmware), and a control unit (an MPU, etc.) realizes the function of storing the authenticator in the write-once area 22b at a data write request from the PC 10 (the unit having the function is referred to as a writing unit although not shown in the attached drawings).

The user area 22a can also store a media ID (MID), a copy history (LOG), etc. as well as DATA and TIME.

FIG. 3 is a flowchart for explanation of the process procedure by the signature generation unit 11.

In FIG. 3, the data 'DATA' (stored on the MO 22) stored in the memory, etc. of the PC 10 is first read (step S1), and the output 'TIME' (absolute time) output from the tamper-free clock built in the MO device 20 is read (step S2). In addition, the IC card reading unit 12 reads the signature key 31 stored on the IC card 30 (step S3).

Then, the signature generating routine is activated (step S4), to generate a signature (authenticator) using the 'DATA', 'TIME', and the signature key 31 (step S5). The process in step S5 is fundamentally equal to the function of the authenticator generating system 22 of the prior application (Japanese Patent Application No-289523), but is realized by software. In this case, at least the above mentioned 'DATA' and 'TIME' are input (additionally, the medium ID 'MID', the history information 'LOG', etc. can be input), a predetermined encryption algorithm is applied using the signature key 31 to obtain a hash function process value, and an authenticator (digital signature) is generated. The predetermined encryption algorithm can be an optional well-known algorithm, for example, a DES encryption algorithm, etc. (published on a home page).

Finally, when the signature (authenticator) generated in the process in step S5 is associated with 'DATA' and 'TIME', and stored on the MO 22, 'DATA' and 'TIME' are stored in the user area 22a which is a data storing area (step S6), and the signature (authenticator) is stored in the write-once area 22b.

Described above is the process of storing data on the MO 22.

Then, the data stored on the MO 22 is used at any time, it is verified first whether or not the data/date has been tampered (whether or not the data is correct).

FIG. 4 shows the flow of the process performed when data is verified, and the configuration used when data is verified.

In FIG. 4, the configuration also shown in FIG.1 is assigned the same reference numeral, and the detailed explanation is omitted here.

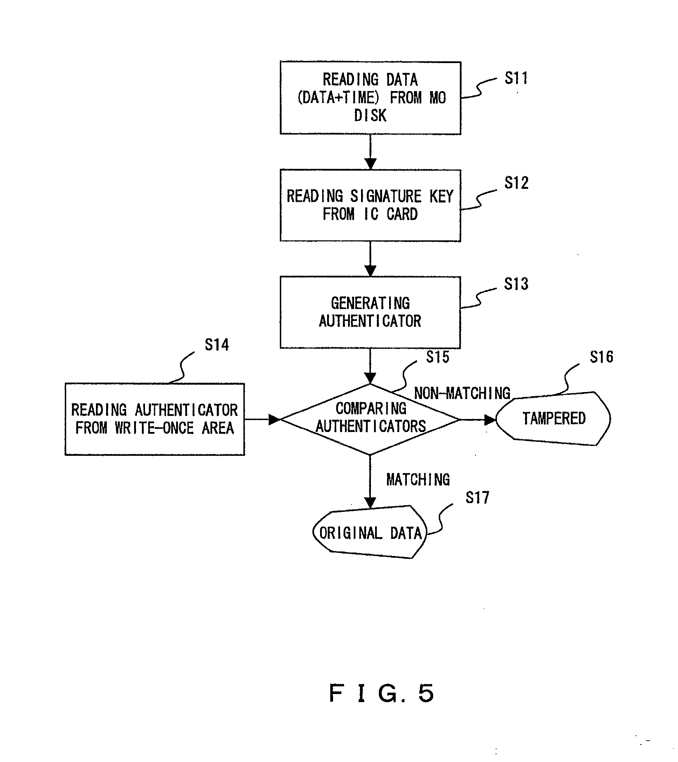

FIG. 5 is a flowchart for explanation of the data verification process procedure.

The data verifying process is described below by referring to FIGS. 4 and 5.

First, the user fetches the MO 22 storing the data as described above by referring to FIGS. 1 through 3, and inserts the data into the MO device 20. The user allows the IC card reading unit 12 to read the signature key 31 stored on the IC card 30 owned by the user.

When the user instructs the data verification unit 13 to verify the data by operating the keyboard, etc. of the PC 10, the data verification unit 13 performs the process shown in FIG. 5.

The data verification unit 13 comprises the signature generation unit 11 and a comparison unit 13a as shown in FIG. 4. Since the signature generation unit 11 has the same function that shown in FIG. 1, they are assigned the same reference numerals.

In FIG. 5, the data verification unit 13 first reads the data 'DATA' and time 'TIME' stored in the user area 22a (step S11). Then, it instructs the IC card reading unit 12 to read the signature key 31 from the IC card 30 (step S12). Then, the signature generation unit 11 can generate a signature (authenticator B) in the same process as in step S5 above using the 'DATA', 'TIME', and the signature key 31 (step S13). If the 'DATA' or 'TIME' has not been tampered, the authenticator B has to be the same as the authenticator (referred to as the authenticator A) stored on the MO 22 after being generated when the data is stored.

Thus, the data verification unit 13 reads the authenticator A stored in the write-once area 22b of the MO 22 (step S14). A comparison unit 13b compares the authenticator A with the authenticator B generated in step S13 (step S15). If they match each other, it is determined that the data is correct (not tampered) (step S17). If they do not match each other, it is determined that the data has been tampered (step S16).

Although not shown in the attached drawings, the determination result in step S16 or S17 is displayed on the display unit of the PC 10.

Described above is the first configuration according to the first embodiment of the present invention.

The second and third configurations are described below.

FIG. 6 shows the outline of the configuration for explanation of the second configuration.

The second configuration is different from the first configuration in that the function of generating a signature is provided in the MO device.

That is, an MO device 50 shown in FIG. 6 comprises a tamper-free clock 51, a signature generation unit 52, and an IC card reading unit 53. However, the IC card reading unit 53 can be omitted. In this case, (as an image is shown by an arrow of a dotted line in FIG. 6,) a PC 40 can comprise an IC card reading unit (not shown in FIG. 6), and the IC card reading unit can read the signature key 31 from the IC card 30 to transmit the signature key 31 to the MO device 50. The following explanation is given by referring to an example of the configuration in which the MO device 50 is provided with the IC card reading unit 53.

It is not necessary that the PC 40 is provided with a signature generation unit. The IC card 30 and the MO 22 are the same as in the first configuration (therefore assigned the same reference numerals).

In the PC 40, when the user issues an instruction to write any data to the MO, a data write request is transmitted together with data 41 to the MO device 50. Upon receipt of the data write request, the signature generation unit 52 of the MO device 50 generates a signature (authenticator) using the data 41 'DATA', the output (time 'TIME') of the tamper-free clock 51, and the signature key 31 read from the IC card 30 by the IC card reading unit 53, stores the authenticator in the write-once area 22b of the MO 22, and also stores the data 41 'DATA' and the time 'TIME' in the user area 22a.

The signature generation unit 52 shown in FIG. 6 can be realized as hardware by, for example, adding any exclusive chip (encryption chip) to an existing MO device.

Furthermore, although not shown in FIG. 6, the data verification unit 13 shown in FIG. 4 can be provided for the MO device 50.

Thus, in the second configuration according to the first embodiment of the present invention, since the function/configuration of the data storage apparatus is included in the MO device (+ IC card), the PC 40 does not require any additional function.

FIG. 7 shows the outline of the configuration for explanation of the third configuration.

The third configuration is different from the first and second configurations in that no IC card is required. In the third configuration, a signature key is stored on the MO.

An MO 70 used in the third configuration shown in FIG. 7 comprises a user area 70a and a write-once area 70b basically as in the MO 22. The user area 70a stores 'DATA' and 'TIME', and the write-once area 70b stores a signature (authenticator). Additionally, a signature key 71 is written in advance to a specific area in the write-once area 70b. Thus, a signature generation unit 62 reads the signature key 71 from the specific area when a signature generating process is performed, and performs the process.

Thus, in the third configuration, no IC card is required, thereby further simplifying the configuration and improving the cost reduction effect.

Described below is the second embodiment of the present invention.

The second embodiment has been developed to solve the problem that there arises impartiality in an information delivery speed when MO is distributed to a plurality of destinations (as described above) at different distribution times (reception dates and times), and to improve the security of the data distributed through an MO medium.

In the second embodiment, the clock in which the settings of the time cannot be changed (that is, a tamper-free clock) and a MO comprising a write-once area (that is, the same as the MO 22) are provided.

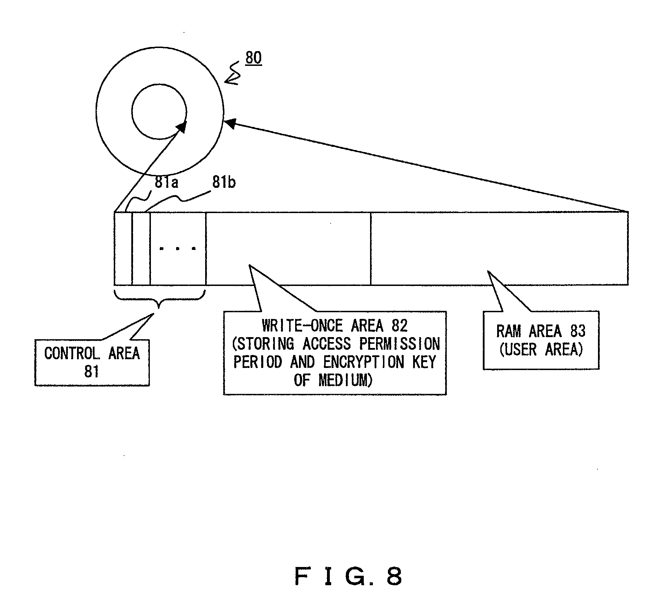

As described above, the MO used in the present embodiment comprises a write-once area. The MO (magneto-optical disk) used in the second embodiment is described below by referring to FIG. 8.

The storage area of a MO 80 shown in FIG. 8 comprises a control area 81, a write-once area 82, and an RAM area 83.

The control area 81 stores data access permission information 81a, low level format information 81b, etc. They are, for example, 1-bit flags. For example, the data access permission information 81a indicates 'data access permitted' when the flag is set ON, and 'data access prohibited' when the flag is set OFF (inverse settings are obviously accepted). The low level format information 81b indicates 'low level format is not executed yet' when the flag is set ON.

When data is written to the RAM area 83, the expiration date (Ts and Te described later) of the MO medium (practically, of the data to be written to the RAM area) is written to the write-once area 82. Since the write-once area 82 is an area to which data can be written only once, the written expiration date cannot be changed (tampered). The write-once area 82 can further store an encryption key. The encryption key is used when data is to be encrypted.

The RAM area 83 is a storage area to which data can be written/rewritten.

The tamper-free clock can be built in the MO device as in the first embodiment, and can also be provided for a PC card as in the prior application.

In this embodiment, an MO device having a built-in tamper-free clock is used.

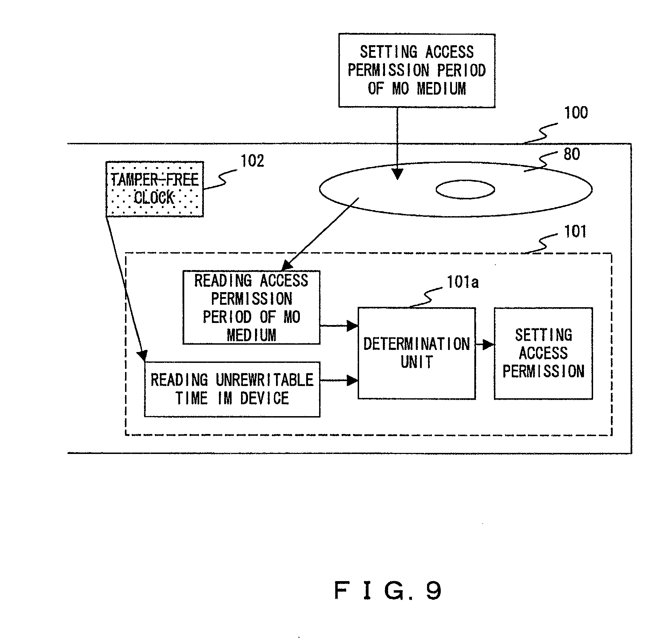

FIG. 9 shows the configuration of the function when an MO device having a built-in tamper-free clock is used.

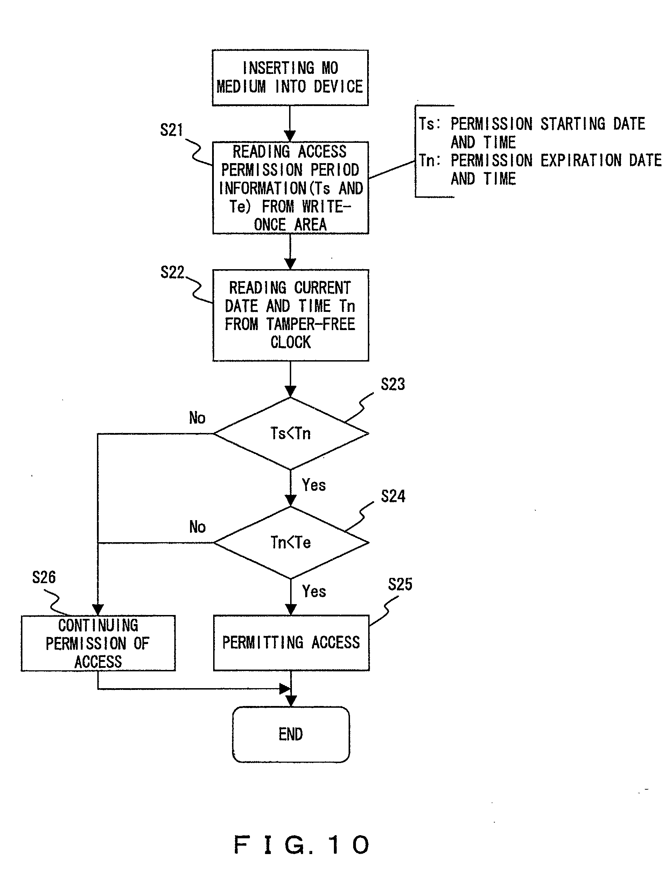

FIG. 10 is a flowchart for explanation of the process procedure by an access permission unit 101 shown in FIG. 9.

FIG. 9 shows an MO device 100 provided for the system to which the MO 80 storing written data is distributed. When data is written to the RAM area 83 of the MO 80 of the system to which an MO is distributed, an expiration date is written to the write-once area 82 of the MO 80. When the MO is distributed, the flag of the data access permission information 81a of the MO 80 is set OFF (data access prohibited).

The MO device 100 is provided with a tamper-free clock 102 and the access permission unit 101. The access permission unit 101 comprises a determination unit 101a.

When a user receiving the MO 80 sets the MO 80 in the MO device 100, the access permission unit 101 first reads permission starting/expiration date information Ts and Te (Ts indicates a permission starting date and time, and Te indicates a permission expiration date and time) (step S21). Then, it reads current date and time information Tn from the tamper-free clock 102 (step S22).

Data access is prohibited (not permitted) except an access permission period (between Ts and Te).

That is, the determination unit 101a determines in steps S23 and S24. If it is determined that the current date and time Tn has not passed the permission starting date and time Ts (NO in step S23), or if it is determined that the current date and time Tn has passed the permission expiration date and time Te (NO in step S24), then the flag of the data access permission information 81a of the MO 80 is still set OFF (data access prohibited) (step S26). On the other hand, if the current date and time Tn is in the access permission period (between Ts and Te) (YES in step S23 and YES in step S24), then the flag of the data access permission information 81a is turned ON. That is, data can be referred to.

In the process example shown in FIG. 10, when the expiration date has passed (NO in step S24), access is continuously prohibited (step S26). However, the following process can replace the process in step S26 to enhance the security of the data and protect the data against being disclosed externally.
(a) If the MO 80 is inserted into the MO device 100 after the expiration date has passed (that is, if the determination in step S24 is NO), then the low level format is applied to the MO 80. Since the low level format completely deletes the data stored on the MO 80, there is no possibility that data can be recovered as in the simple file deletion process in a personal computer or in a logic format. Thus, information can be protected against leakage.
(b) However, it takes a considerably long time to set the low level format, an easier countermeasure can be taken. For example, the flag of the low level format information 81b can be turned ON (indicating that the low level format has not been set).

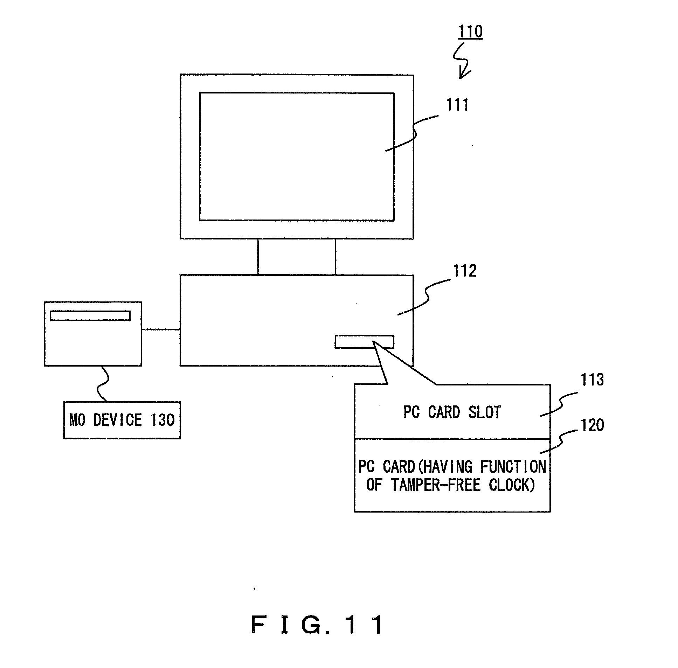

FIG. 11 shows the entire configuration of the system when a PC card having a tamper-free clock is used.

The configuration shown in FIG. 11 includes a personal computer 110 comprising a display 111 and a body 112, and the body 112 of the personal computer 110 is provided with a PC card slot 113. When an MO is used, the user inserts a PC card 120 (comprising a tamper-free clock) into the PC card slot 113. An MO device 130 is connected to the personal computer.

The configuration shown in FIG. 11 is almost the same as the configuration shown in FIG. 9 except that the tamper-free clock is provided for the PC card 120, not for the MO device. The access permission unit 101 can be provided for the personal computer 110 or the PC card 120.

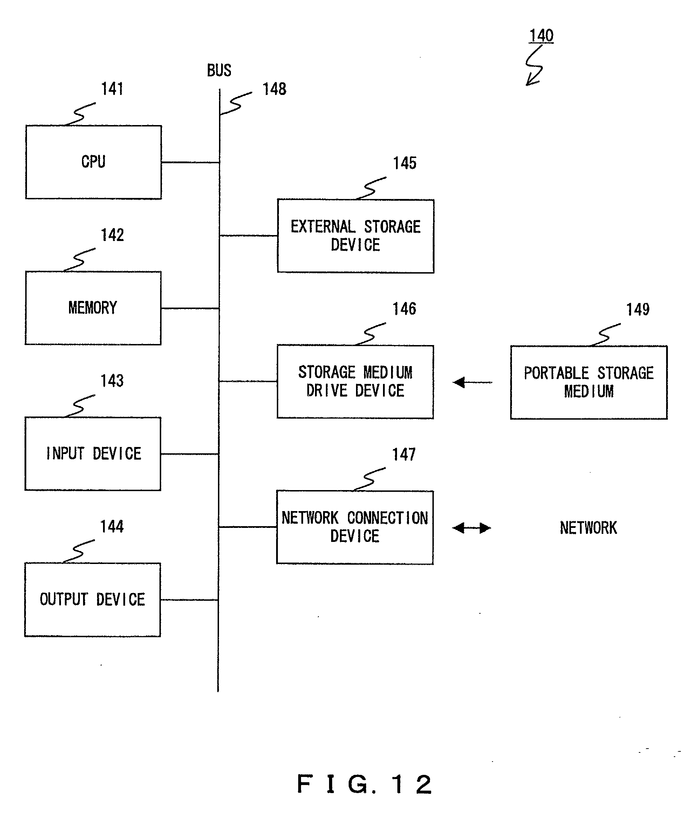

FIG. 12 shows an example of the hardware configuration of the information processing device such as a PC, etc. comprising the above mentioned signature generation unit.

An information processing device 140 shown in FIG. 12 comprises a CPU 141, memory 142, an input device 143, an output device 144, an external storage device 145, a storage medium drive device 146, a network connection device 147, etc. and they are connected through a bus 148. The configuration shown in FIG. 12 is only an example, and is not limited to.

The CPU 141 is a central processing device for controlling the entire information processing device 140.

The memory 142 can be RAM, etc. for temporarily storing a program or data stored in the external storage device 145 (or a portable storage medium 149) when the program is executed, the data is updated, etc. The CPU 141 performs various processes as described above using the program/data read to the memory 142.

The input device 143 can be, for example, a keyboard, a mouse, a touch panel, etc.

The output device 144 can be, for example a display, a printer, etc.

The external storage device 145 can be, for example, a hardware device, etc., and stores a program/data, etc. for use in realizing the function of the signature generation unit, the data verification unit, etc.

The storage medium drive device 146 reads the program/data, etc. stored on the portable storage medium 149. That is, the above mentioned program/data, etc. can be stored in the external storage device 145 or on the portable storage medium 149.

The portable storage medium 149 can be, for example, an FD (flexible disk), CD-ROM, a DVD, a magneto-optical disk, etc.

The network connection device 147 is connected to a network to communicate a program/data with an external information processing device.

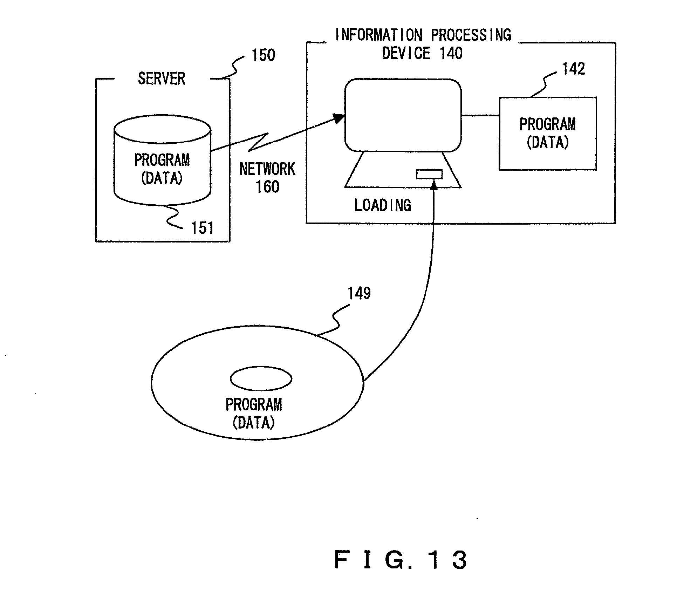

FIG. 13 shows an example of a storage medium.

As shown in FIG. 13, a program/data can be read and stored in the memory 142 and executed by inserting into the body of the information processing device 140 the portable storage medium 149 storing the program/data for use in realizing the function of the signature generation unit, the data verification apparatus, etc. Furthermore, the program/data 151 can be downloaded from a server 150 of an external program/data provider through a network 150 (Internet, etc.) connected by the network connection device 147.

The present invention is not limited to the above mentioned apparatus/method, and can also be configured as a storage medium (the portable storage medium 149, etc.) storing the program/data, or a signal for use by a program in transmission through a transmission medium.

In this embodiment, a 'computer' can also refer to the information processing device 140 (information processing device configuring a host device). A 'computer' is not limited to a personal computer, but can be, for example, a terminal device such as a mobile phone, etc., a digital camera for static images and/or moving pictures, an intelligent television device, etc.

Accordingly, although the above description has referred to a program stored on a device-readable medium, it will be appreciated that an operating program embodying the present invention need not be stored on a device-readable medium and could, for example, be embodied in a signal such as a downloadable data signal provided from an Internet website. The appended claims are to be interpreted as covering an operating program by itself, or as a record on a carrier, or as a signal, or in any other form.

As described above, according to a data storage apparatus, a data storing method, and a data verification apparatus embodying the present invention, the corresponding of data and its date stored on a portable storage medium can be verified with a common and general-purpose configuration, and the configuration can be designed for user convenience with the security maintained. Additionally, the security can be further improved.

Furthermore, according to a data access permission apparatus embodying the present invention, the impartiality and the security of data can be enhanced when the portable storage medium is externally distributed.

## Claims

1. A data storage apparatus, comprising:
acquiring means (12) for acquiring a signature key from a portable/simple storage medium (30); and
signature generation means (11) for generating a signature, when issuing to a storage medium drive device a request to write data to a portable storage medium (22), using the data, time information output by a clock which cannot adjust time information, and the signature key read from the portable/simple storage medium (30) by said acquiring means (12).

2. A data storage apparatus, comprising:
clock means (51) which cannot adjust time information; and
writing means for writing to a portable storage medium (22), upon storing data, the data, time information output by said clock means (51), and a signature generated using the data, the time information, and a signature key read from a portable/simple storage medium (30) with association.

3. A data storage apparatus, comprising:
clock means (61) which cannot adjust time information; and
writing means for writing to a portable storage medium (70), upon storing data, the data, the time information output by the clock means (61), and a signature generated using the data, the time information, and a signature key (71) stored in a write-once area (70b) of the portable storage medium (70) with association.

4. The apparatus according to claim 2, wherein
said portable storage medium (22) has an erasable user area (22a) and a write-once area (22b), and said writing means writes the data and the time information to the user area (22a), and the signature to the write-once area (22b).

5. The apparatus according to claim 3, wherein
said portable storage medium (70) has an erasable user area (70a) and said write-once area (70b), and said writing means writes the data and the time information to the user area (70a), and the signature to the write-once area (70b).

6. A data verification apparatus which verifies correctness of data in a portable storage medium storing data, time information, and a signature as associated with one another, comprising:
signature generation means (11) for generating a signature using the data and the time information stored on the portable storage medium (22), and the signature key used in generating the signature when the data is stored, and read from a portable/simple storage medium (30) storing the signature key; and
comparison-determination means (13) for comparing the signature generated by said signature generation means (11) with the signature stored on the portable storage medium (22), and determining the correctness of the data or the time information depending on a matching/non-matching result.

7. The apparatus according to claim 6, wherein
said portable storage medium (22) comprises an erasable user area (22a) and a write-once area (22b), the data and the time information are stored in the user area (22a), and the signature is stored in the write-once area (22b).

8. A data access permission apparatus, comprising:
clock means (102) which cannot adjust time information; and
access permission means (101) for reading an expiration date from a portable storage medium (80) having a user area storing data and a write-once area storing the expiration date, comparing the expiration date with current time information output by said clock means (102), and permitting access to the data stored in the user area if the expiration date has not passed a current date.

9. A data access permission apparatus, comprising:
clock means (102) which cannot adjust time information; and
access permission means (101) for reading an expiration date from a portable storage medium (80) having a user area storing data and a write-once area storing the expiration date, comparing the expiration date with current time information output by said clock means (102), and, if the expiration date has passed a current date, either performing a low level format on the portable storage medium or setting information that the portable storage medium is not low-level-formatted.

10. A data storing method, comprising when data is stored to a portable storage medium:
generating a signature using the data, time information obtained from a clock which cannot adjust the time information, and a signature key read from a portable/simple storage medium; and
associating the data, the time information, and the signature with one another, and writing the data, the information, and the signature on the portable storage medium.

11. The method according to claim 10, wherein
said data and time information are written to the user area of the portable storage medium, and said signature is written to the write-once area.

12. A computer-readable storage medium storing a program used to direct a computer to perform the functions of:
generating a signature using data to be written to a portable storage medium, time information obtained from a clock which cannot adjust the time information, and a signature key read from a portable/simple storage medium;
associating the data, the time information, and the signature with one another, and writing the data, the information, and the signature on the portable storage medium.

13. An operating program which, when loaded into a processing device, causes the processing device to become apparatus as claimed in any one of claims 1 to 9.

14. An operating program which, when run on a processing device, causes the processing device to carry out a method as claimed in claim 10 or 11.

15. An operating program as claimed in claim 13 or 14, carried on a carrier medium.

16. An operating program as claimed in claim 15, wherein the carrier medium is a transmission medium.

17. An operating program as claimed in claim 15, wherein the carrier medium is a storage medium.
